# EUROPÄISCHE PATENTANMELDUNG

(11) **EP 2 599 706 A2**
(43) Veröffentlichungstag der Anmeldung: **05.06.2013**
(21) Anmeldenummer: 12190477.5
(22) Anmeldetag: 30.10.2012
(51) Int. Cl.: B62K 25/08, F16F 9/32

(54) **Ungedämpftes Gabelbein, insbesondere für eine Gabel eines Motorrads sowie Federgabel**

(30) Priorität: 22.11.2011 DE 102011086772
(71) Anmelder: Bayerische Motoren Werke Aktiengesellschaft, 80809 München (DE)
(72) Erfinder: Martino, Claudio, 81247 Muenchen (DE); Schatzberger, Uwe, 84172 Buch (DE); Heidrich, Martin, 83410 Laufen (DE); Dr.Dreifke, Lars, 85386 Eching (DE)

(57) **Zusammenfassung**

Ungedämpftes Gabelbein (1) insbesondere für eine Gabel eines Motorrads, mit einer Federvorspannungsverstelleinrichtung (11, 13, 14), einer Ausfederbegrenzungseinrichtung (17) und einer Sensoreinrichtung (22), die zum Sensieren der momentanen Hubposition und/oder der Hubgeschwindigkeit und/oder der Hubbeschleunigung des Gabelbeins (1) vorgesehen ist.

## Beschreibung

Die vorliegende Erfindung betrifft ein ungedämpftes Gabelbein gemäß den Merkmalen des Patentanspruches 1 sowie eine Federgabel gemäß den Merkmalen des Patentanspruches 15.

Gabelbeine für Motorradgabeln sind z. B. aus der EP 1369345 B1 bekannt.

Aufgabe der Erfindung ist es, ein Gabelbein zu schaffen, das insbesondere für eine Gabel eines Motorrads geeignet ist und das kostengünstig aufgebaut und der jeweiligen Fahrsituation anpassbar ist, sowie eine mit einem derartigen Gabelbein ausgestattete Federgabel.

Diese Aufgabe wird durch die Merkmale des Patentanspruches 1 bzw. 15 gelöst. Vorteilhafte Ausgestaltungen und Weiterbildungen der Erfindung sind den Unteransprüchen zu entnehmen.

Ausgangspunkt der Erfindung ist ein ungedämpftes Gabelbein, insbesondere für eine Gabel eines Motorrads. "Ungedämpft" bedeutet in diesem Zusammenhang, dass das Gabelbein keine gesonderte Einrichtung aufweist, welche Federbewegungen des Gabelbeins dämpft.

Der Kern der Erfindung besteht darin, dass das Gabelbein eine "Federvorspannungsverstelleinrichtung", eine "Ausfederbegrenzungseinrichtung" und eine Sensoreinrichtung aufweist. Die Sensoreinrichtung ist zum Sensieren der momentanen Hubposition und/oder der momentanen Hubgeschwindigkeit und/oder der Hubbeschleunigung des Gabelbeins vorgesehen. Unter dem Begriff "Hubposition" ist die Relativstellung der beiden "Teleskoprohre" (Standrohr und Gleitrohr) zu verstehen. Die Hubgeschwindigkeit ist dementsprechend die erste zeitliche Ableitung dieser Relativposition, die Hubbeschleunigung die zweite zeitliche Ableitung.

Bei der Sensoreinrichtung kann es sich um einen handelsüblichen Sensor handeln, z. B. auf der Basis relativ zu einer Spule verschieblich angeordneten Magneten, um eine kapazitiven Sensor etc.

Unter einer "Federvorspannungsverstelleinrichtung" wird eine Einrichtung verstanden, mittels der bei einem momentanen Federungszustand des Gabelbeins die von einem Federelement des Gabelbeins ausgeübte Vorspannkraft bzw. Vorspannung verstellt werden kann. Dies kann z. B. dadurch realisiert sein, dass eine Federbasis verschiebbar bzw. verstellbar angeordnet ist, was später noch näher erläutert wird.

Bei der Ausfederbegrenzungseinrichtung handelt es sich um eine Einrichtung, welche verhindert, dass das Gabelbein beim Ausfedern "in seine Bestandteile" auseinandergezogen werden kann, was wichtig ist, wenn das Gabelbein z. B. beim Aufbocken des Fahrzeugs in der Werkstatt auseinandergezogen wird. Eine Ausfederbegrenzungseinrichtung ist ebenfalls sehr wichtig, wenn das Gabelbein bei einem Geländemotorrad eingesetzt wird, mit dem auch Sprünge durchgeführt werden. Von Bedeutung ist eine Ausfederbegrenzungseinrichtung auch bei Sportmotorrädern, in Fahrzuständen, in denen mit maximaler Beschleunigung aus der Kurve heraus beschleunigt wird und das Vorderrad zum Abheben von der Fahrbahn neigt. Ein Gabelbein gemäß der Erfindung weist ein so genanntes Standrohr und ein so genanntes Gleitrohr auf, welches ein Stück weit in das Standrohr eingeführt und relativ dazu, d. h. in dem Standrohr, verschieblich ist. Funktional zwischen dem Standrohr und dem Gleitrohr des Gabelbeins ist eine Tragfedereinrichtung bzw. ein Tragfederelement angeordnet, welche bzw. welches im Betrieb Gewichtskräfte des Fahrzeugs aufnimmt. Im Folgenden wird der Begriff "Tragfederelement" verwendet, wobei dieser Begriff ganz allgemein im Sinne einer Tragfedereinrichtung zu verstehen ist.

Nach einer Weiterbildung der Erfindung ist die Sensoreinrichtung im Inneren des Gleitrohrs angeordnet, vorzugsweise ist sie vollständig im Inneren des Gleitrohrs angeordnet. Die Sensoreinrichtung ist dazu vorgesehen, eine Relativstellung und/oder eine Relativgeschwindigkeit und/oder eine Relativbeschleunigung des Gleitrohrs in Bezug auf das Standrohr zu messen.

Es kann vorgesehen sein, dass die Sensoreinrichtung ein erstes und ein relativ dazu verschieblich angeordnetes zweites Sensorelement aufweist. Das erste Sensorelement ist fest in Bezug auf das Gleitrohr angeordnet. Das zweite Sensorelement ist fest in Bezug auf das Standrohr oder fest in Bezug auf eine Standrohrfederbasis (s. u. angeordnet). Beim Ein- bzw. Ausfedern des Gabelbeins kommt es somit zu einer Relativverschiebung der beiden Sensorelemente, entsprechend der Relativverschiebung von Gleit- und Standrohr.

Die Sensoreinrichtung ist vorzugsweise in einem Bereich zwischen der Standrohrfederbasis und einem freien Ende des Gleitrohrs angeordnet.

Das Tragfederelement weist ein Ende auf, das durch eine "Standrohrfederbasis" abgestützt ist, und ein zweites Ende, das durch eine "Gleitrohrfederbasis" abgestützt ist. Das Tragfederelement ist also über die Standrohrfederbasis direkt oder indirekt gegenüber oder an dem Standrohr abgestützt und über die Gleitrohrfederbasis direkt oder indirekt an dem Gleitrohr. Ein Zusammenschieben bzw. Einfedern des Gabelbeins führt zu einer Komprimierung des Tragfederelements. Umgekehrt führt ein Auseinanderbewegen der beiden "Rohre" des Gabelbeins, d. h. ein Ausfedern des Gabelbeins, zu einer Entlastung des Tragfederelements.

Die oben erwähnte Federvorspannungsverstelleinrichtung kann z. B. dadurch realisiert sein, dass eine der beiden Federbasen, d. h. die Standrohrfederbasis oder die Gleitrohrfederbasis in Bezug auf das Rohr, dem diese eine Federbasis zugeordnet ist, d. h. in Bezug auf das Standrohr bzw. auf das Gleitrohr, in Rohrlängsrichtung verstellbar ist. Durch Verstellen bzw. Verschieben der betreffenden Federbasis kann die Vorspannung des Tragfederelements verstellt werden. Vorzugsweise ist die Standrohrfederbasis in Standrohrlängsrichtung verstellbar in Bezug auf das Standrohr angeordnet.

Die Standrohrfederbasis kann z. B. über eine Druckstange an einem dem Gleitrohr abgewandten deckelartigen Element des Standrohrs abgestützt sein. Bei der Standrohrfederbasis kann es sich z. B. um ein teller- oder ringartiges Element handeln, an dem ein Ende des Tragfederelements abgestützt ist. Dieses teller- oder ringförmige Element (Standrohrfederbasis) kann über eine Druckstange oder ein Druckrohr mit einem Ende oder mit einem an einem Ende des Standrohrs vorgesehenen Element verbunden sein. An dem Ende des Standrohrs kann eine Verstelleinrichtung vorgesehen sein, welche ein Verschieben der Druckstange bzw. des Druckrohrs in Standrohrlängsrichtung und somit eine Verstellung der Standrohrfederbasis ermöglicht.

Nach einer Weiterbildung der Erfindung ist vorgesehen, dass die Ausfederbegrenzungseinrichtung ab einem vorgegebenen Ausfederweg einem weiteren Herausziehen des Gleitrohrs aus dem Standrohr elastisch entgegenwirkt und ein vollständiges Herausziehen verhindert. "Elastisch Entgegenwirken" bedeutet in diesem Zusammenhang, dass eine Federeinrichtung bzw. ein Federelement vorgesehen ist, das ab dem vorgegebenen Ausfederweg einer das Standrohr und das Gleitrohr auseinanderziehenden Kraft (Ausfederkraft) entgegenwirkt. Beim Aufbocken des Fahrzeugs bzw. bei Sprüngen im Gelände oder bei einem sogenannten "Wheely", bei dem das Vorderrad beim Beschleunigen von der Fahrbahn abhebt, wird somit vermieden, dass beim Ausfedern die Ausfederbewegung schlagartig durch einen Endanschlag begrenzt wird. Vielmehr wird eine Ausfederbewegung durch die Federeinrichtung der Ausfederbegrenzungseinrichtung abgefedert.

Nach einer Weiterbildung der Erfindung weist die Ausfederbegrenzungseinrichtung eine Federeinrichtung bzw. ein Federelement auf, welche bzw. welches bei Überschreiten des vorgegebenen Ausfederwegs komprimiert wird.

Die Ausfederbegrenzungseinrichtung ist vorzugsweise auf einer dem Gleitrohr abgewandten Seite der Standrohrfederbasis angeordnet. Eine derartige Anordnung ermöglicht eine besonders einfache konstruktive Gestaltung der Ausfederbegrenzungseinrichtung, was weiter unten noch näher erläutert wird.

Es kann vorgesehen sein, dass ein erstes Ende der Federeinrichtung bzw. des Federelements der Ausfederbegrenzungseinrichtung durch ein erstes Abstützelement abgestützt ist, welches über eine Zugstange oder ein Zugrohr mit einem Ende oder einem deckelartigen Element des Standrohrs verbunden ist.

Ein zweites Ende der Federeinrichtung bzw. des Federelements der Ausfederbegrenzungseinrichtung wird bei Überschreiten des oben erwähnten, vorgegebenen Ausfederwegs durch ein zweites Abstützelement abgestützt, welches mit dem Gleitrohr verbunden ist. Das zweite Abstützelement kann in einem dem deckelartigen Element des Standrohrs nahen Bereich des Gleitrohrs mit dem Gleitrohr verbunden sein.

Ein wesentlicher Gedanke der Erfindung besteht ferner in einer Federgabel, die ein erstes, ungedämpftes Gabelbein aufweist, wie es oben beschrieben wurde, und ein zweites, gedämpftes Gabelbein. Das zweite Gabelbein weist eine elektronisch ansteuerbare bzw. regelbare Dämpfungseinrichtung auf. Einer die Dämpfung der Dämpfungseinrichtung des zweiten Gabelbeins steuernden bzw. regelnden Steuer- bzw. Regelelektronik werden Messsignale zugeführt, die von dem Sensor generiert werden, der in dem ungedämpften Gabelbein vorgesehen ist. Die Dämpfung der Dämpfungseinrichtung wird auf Basis dieser Messsignale gesteuert bzw. geregelt. Da eine elektronisch ansteuerbare Dämpfungseinrichtung, die in das zweite Gabelbein integriert ist, beträchtlichen Bauraum beansprucht, wurde die für deren Ansteuerung erforderliche Sensoreinrichtung in dem anderen, ersten Gabelbein, welches keine Dämpfungseinrichtung aufweist, untergebracht.

Im Folgenden wird die Erfindung im Zusammenhang mit der Zeichnung näher erläutert. Es zeigen:

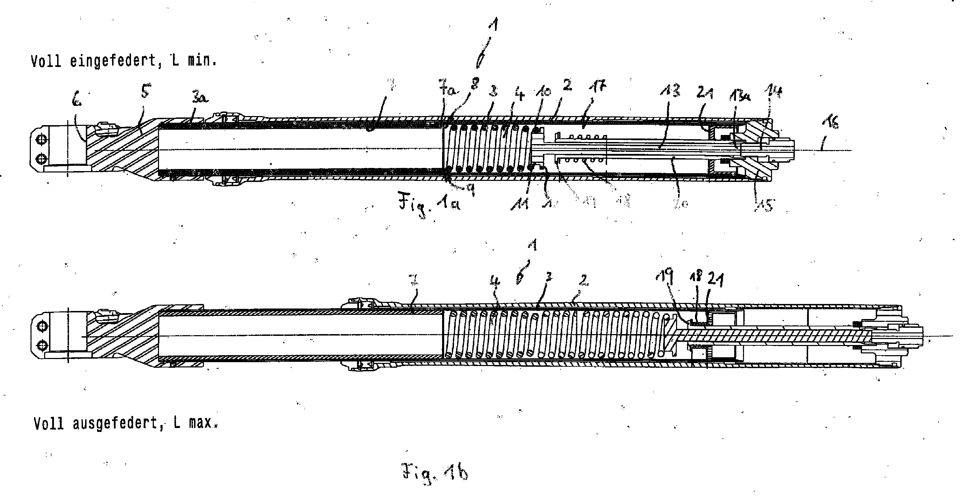

- Figur 1 a: ein ungedämpftes Gabelbein gemäß der Erfindung in voll eingefedertem Zustand,
- Figur 1 b: das Gabelbein der Figur 1 a in voll ausgefedertem Zustand,
- Figur 2a, 2b: das Gabelbein der Fig. 1 a bzw. 1 b, wobei zusätzlich eines Sensoreinrichtung zum Sensieren der momentanen Hubposition und/oder der momentanen Hubgeschwindigkeit und/oder der Hubbeschleunigung des Gabelbeins vorgesehen ist.

Die Figuren 1a, 1b zeigen ein Gabelbein 1 für eine Gabel eines Motorrads. Das Gabelbein 1 weist ein Standrohr 2, ein Gleitrohr 3, welches ein Stück weit in das Standrohr 2 eingeschoben ist, und ein funktional zwischen dem Standrohr 2 und dem Gleitrohr 3 angeordnetes Tragfederelement, das hier durch eine Spiralfeder 4, die im Folgenden als Tragfeder 4 bezeichnet wird, gebildet ist.

Ein "unteres" Ende 3a des Gleitrohrs 3 ist mit einem Achsaufnahmeelement 5, welches eine Nabe 6 aufweist, verbunden.

In dem Gleitrohr 3 ist ein Stützrohr 7 angeordnet. Bei dem Stützrohr 7 kann es sich beispielsweise um ein Kunststoffrohr handeln. Ein unteres Ende des Stützrohrs 7 stützt sich an dem Achsaufnahmeelement 5 ab. Ein oberes Ende 7a des Stützrohrs 7 bildet eine "Gleitrohrfederbasis" 8, d. h. eine Auflage, auf der ein unteres Ende 9 der Tragfeder 4 auf- bzw. anliegt.

Ein oberes Ende 10 der Tragfeder 4 ist an einer Standrohrfederbasis 11 abgestützt. Bei der Standrohrfederbasis 11 handelt es sich um ein tellerartiges Element mit einem Absatz 12, welcher das obere Ende 10 der Tragfeder 4 zentriert.

Die Standrohrfederbasis 11 ist über eine Druckstange 13 an einem Verstellelement 14 abgestützt. Das Verstellelement 14 ist in ein deckelartiges Element 15 eingeschraubt, welches in ein oberes Ende des Standrohrs 2 eingesetzt ist. Das Verstellelement 14 kann z. B. mit einem Mehrkant (z. B. Schraubenkopf o. ä.) oder mit einem Innenmehrkant versehen sein. Durch Drehen bzw. Verschrauben des Verstellelements 14 kann dieses im Rahmen eines vorgegebenen Verstellwegs (von z. B. 15mm) in einer Längsrichtung 16 des Gabelbeins 1 verschoben werden. Ein oberes Ende 13a der Druckstange 13 steht an einem unteren Ende des Verstellelements 14 an. Durch Verstellen des Verstellelements 14 kann somit auch die Druckstange 13 in Längsrichtung 16 verschoben werden. Ein Verschieben der Druckstange 13 führt zu einer entsprechenden Verschiebung der Standrohrfederbasis 11 und somit zu einer veränderten Vorspannung der Tragfeder 4.

In dem in Figur 1a gezeigten Zustand ist das Gabelbein 1 voll eingefedert. In diesem Zustand steht die Achsaufnahme 5 fast am unteren Ende des Standrohrs 2 an. Um beim Ausfedern des Gabelbeins 1 ein Herausziehen des Gleitrohrs 3 aus dem Standrohr 2 zu verhindern, ist eine Ausfederbegrenzungseinrichtung 17 vorgesehen.

Die Ausfederbegrenzungseinrichtung 17 weist eine Feder 18 auf. Ein unteres Ende der Feder 18 ist hier durch eine ringartige Auflage 19 abgestützt. Die ringartige Auflage 19 wiederum ist über ein Zugrohr 20 mit dem deckelartigen Element 15 verbunden und somit unverschieblich relativ zu dem Standrohr 2 festgelegt.

In dem in Figur 1a gezeigten voll eingefederten Zustand ist die Ausfederbegrenzungseinrichtung 17 passiv, d. h. unwirksam. Ab einem vorgegebenen Ausfederweg liegt ein oberes Ende der Feder 18 an einem Abstützelement 21 an, das mit dem oberen Ende des Gleitrohrs 3 verbunden ist. Beim Ausfedern der Gleitrohrs 3 aus dem Standrohr 2 wird somit das Abstützelement 21 mit verschoben, bis es zur Anlage an dem oberen Ende der Feder 18 kommt. Sobald das Abstützelement 21 zur Anlage an dem oberen Ende der Feder 18 kommt, wird die weitere Ausfederbewegung durch die als Druckfeder wirkende Feder 18 abgefedert. Im voll ausgefederten Zustand des Gabelbeins (vgl. Figur 1 b) ist die Feder 18 vollständig komprimiert. Dem gegenüber ist die Tragfeder 4 maximal entlastet. Wie aus den Figuren 1a, 1b ersichtlich ist, weist das Gabelbein 1 keine Dämpfungseinrichtung auf. Federbewegungen des Gabelbeins 1 verlaufen also, abgesehen von nicht zu vermeidenden Reibkräften, die der Konstruktion des Gabelbeins immanent sind, ungedämpft.

Ein derartiges Gabelbein 1 kann mit einem zweiten Gabelbein (nicht dargestellt), welches ebenfalls eine Federvorspannungsverstelleinrichtung und eine Ausfederbegrenzungseinrichtung und zusätzlich eine Dämpfungseinrichtung aufweist, zu einer Gabel kombiniert sein. Es kann vorgesehen sein, dass die Gabel nur in einem der beiden Gabelrohre, d. h. in dem in Bezug auf die Figuren 1a, 1b "anderen Gabelrohr" eine Dämpfungseinrichtung aufweist. Eine Gabel, bei der nur eines der beiden Gabelrohre mit einer Dämpfungseinrichtung versehen ist, ist kostengünstiger und leichter als eine Gabel, bei der beide Gabelrohre mit einer Dämpfungseinrichtung versehen sind.

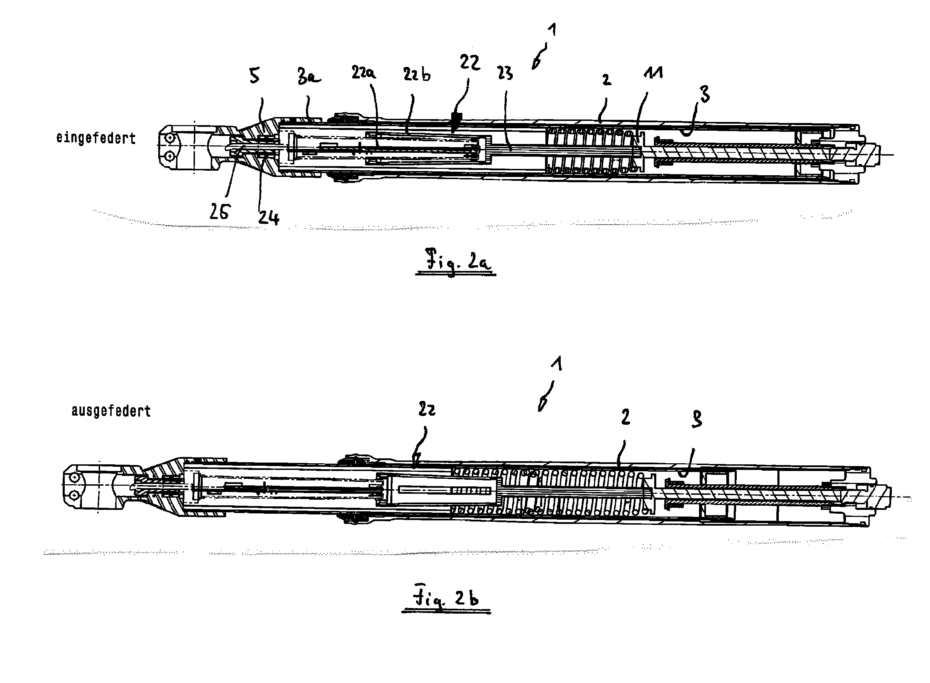

Die Figuren 2a, 2b zeigen im Prinzip dasselbe Gabelbein, das in den Figuren 1 a und 1 b gezeigt ist, jedoch ergänzt um eine Sensoreinrichtung 22, die zum Sensieren der momentanen Hubposition und/oder der momentanen Hubgeschwindigkeit und/oder der momentanen Hubbeschleunigung des Standrohrs 2 in Bezug auf das Gleitrohr 3, oder umgekehrt, vorgesehen ist.

Figur 2a zeigt einen eingefederten Zustand des Gabelbeins 1, Figur 2b einen ausgefederten Zustand des Gabelbeins 1.

Die Sensoreinrichtung 22 ist, wie aus den Figuren 2a, 2b ersichtlich ist, vollständig im Inneren des Gleitrohrs 3 angeordnet. Sie weist ein erstes Sensorelement 22a auf, das hier fest mit dem unteren Ende 3a des Gleitrohrs 3 bzw. dem fest mit dem Gleitrohr 3 verbundenen Achsaufnahmeelement 5 verbunden ist. Die Sensoreinrichtung 22 weist ferner ein zweites Sensorelement 22b auf, das fest in Bezug auf das Standrohr 2 oder, genauer gesagt, fest in Bezug auf die Standrohrfederbasis 11 angeordnet ist.

Wie aus den Figuren 2a und 2b ersichtlich ist, hat das zweite Sensorelement 22b die Form eines zu dem Achsaufnahmeelement 5 hin offenen Topfes bzw. die Form einer zu dem Achsaufnahmeelement 5 hin offenen Hülse. Es ist hier über eine Stange 23 mit der Standrohrfederbasis 11 verbunden. Das erste Sensorelement 22a ragt in das zweite Sensorelement 22b hinein und hat eine dronartige Form.

Bei der Sensoreinrichtung 22 kann es sich beispielsweise um eine elektromagnetische Sensoreinrichtung handeln. Beispielsweise können an dem zweiten Sensorelement 22b ein oder mehrere Magneten angeordnet sein, die mit einer oder mehreren Spulen, welche an dem ersten Sensorelement 22a angeordnet sind, zusammenwirken. Bei einer Relativverschiebung des Gleitrohrs 3 in Bezug auf das Standrohr 2, oder umgekehrt, wird in der elektrischen Spule bzw. in den elektrischen Spulen eine elektrische Spannung bzw. ein Strom induziert, der gemessen werden kann. Aus diesem Signal kann die Relativposition bzw. die Relativgeschwindigkeit bzw. die Relativbeschleunigung des Gleitrohrs 3 in Bezug auf das Standrohr 2 ermittelt werden.

Wie aus Figur 2a ersichtlich ist, ist in dem Achsaufnahmeelement 5 eine Lochschraube 24 vorgesehen, über die eine elektrische Leitung 25, welche mit der Sensoreinrichtung 22 verbunden ist, herausgeführt ist. Die elektrische Leitung 25 ist mit einer hier nicht näher dargestellten Elektronik verbunden, welche die von der Sensoreinrichtung 22 erzeugten Signale auswertet bzw. weiter verarbeitet.

Wie bereits erwähnt, kann ein ungedämpftes Gabelbein, wie es in den Figuren 2a, 2b gezeigt ist, mit einem zweiten Gabelbein zu einer Federgabel kombiniert sein. In dem zweiten Gabelbein kann eine elektrisch ansteuerbare Dämpfungseinrichtung vorgesehen sein. Die Dämpfungseinrichtung wird von der Elektronik, welche die von der Sensoreinrichtung 22 gelieferten Signale auswertet bzw. weiterverarbeitet, angesteuert. Bei einer derartigen Federgabel sind die beiden Funktionen "Messen der Gabelstellung bzw. Gabelbewegung" und "Dämpfen von Gabelbewegungen" auf die beiden Gabelbeine verteilt, d.h. an dem einen Gabelbein wird gemessen, am anderen Gabeibein wird gedämpft.

## Patentansprüche

1. Ungedämpftes Gabelbein (1), insbesondere für eine Gabel eines Motorrads, mit
● einer Federvorspannungsverstelleinrichtung (11, 13, 14),
● einer Ausfederbegrenzungseinrichtung (17) und
● einer Sensoreinrichtung (22), die zum Sensieren
o der momentanen Hubposition und/oder
o der Hubgeschwindigkeit und/oder
o der Hubbeschleunigung des Gabelbeins vorgesehen ist.

2. Gabelbein nach Anspruch 1, **dadurch gekennzeichnet, dass** das Gabelbein (1) ein Standrohr (2), ein Gleitrohr (3), welches ein Stück weit in das Standrohr (2) hineinragt und relativ dazu verschieblich ist, und ein Tragfederelement (4) aufweist, dessen eines Ende (10) durch eine Stand-rohrfederbasis (11) und dessen anderes Ende durch eine Gleitrohr-federbasis (8) abgestützt ist, wobei das Tragfederelement (4) bei einem Einschieben des Gleitrohrs (3) in das Standrohr (2) komprimiert wird.

3. Gabelbein nach Anspruch 2, **dadurch gekennzeichnet, dass** eine der beiden Federbasen (11) in Bezug auf das Rohr (2), dem diese eine Federbasis (11) zugeordnet ist, in Rohrlängsrichtung (16) verstellbar und somit Teil der Federvorspannungsverstelleinrichtung (11, 13, 14) ist.

4. Gabelbein nach Anspruch 2 oder 3, **dadurch gekennzeichnet, dass** die Standrohrfederbasis (11) in Standrohrlängsrichtung (16) verstellbar in Bezug auf das Standrohr (2) ist.

5. Gabelbein nach einem der Ansprüche 2 bis 4, **dadurch gekennzeichnet, dass** die Standrohrfederbasis (11) über eine Druckstange (13) an einem dem Gleitrohr (3) abgewandten deckelartigen Element (15) des Standrohrs (2) abgestützt ist.

6. Gabelbein nach einem der Ansprüche 1 bis 5, **dadurch gekennzeichnet, dass** die Ausfederbegrenzungseinrichtung (17) ab einem vorgegebenen Ausfederweg einem weiteren Herausziehen des Gleitrohrs (3) aus dem Standrohr (2) elastisch entgegenwirkt und ein vollständiges Herausziehen verhindert.

7. Gabelbein nach einem der Ansprüche 1 bis 6, **dadurch gekennzeichnet, dass** die Ausfederbegrenzungseinrichtung (17) ein Federelement (18) aufweist, welches bei Überschreiten des vorgegebenen Ausfederwegs komprimiert wird.

8. Gabelbein nach einem der Ansprüche 1 bis 7, **dadurch gekennzeichnet, dass** die Ausfederbegrenzungseinrichtung (17) auf einer dem Gleitrohr abgewandten Seite der Standrohrfederbasis (11) angeordnet ist.

9. Gabelbein nach einem der Ansprüche 7 oder 8, **dadurch gekennzeichnet, dass** ein erstes Ende des Federelements (18) der Ausfederbegrenzungseinrichtung (17) durch ein erstes Abstützelement (19) abgestützt ist, welches über eine Zugstange oder ein Zugrohr (20) mit dem deckelartigen Element (15) des Standrohrs (2) verbunden ist.

10. Gabelbein nach einem der Ansprüche 7 bis 9, **dadurch gekennzeichnet, dass** ein zweites Ende des Federelements (18) der Ausfederbegrenzungseinrichtung (17) bei Überschreiten des vorgegebenen Ausfederwegs durch ein zweites Abstützelement (21) abgestützt ist, welches mit dem Gleitrohr (3) verbunden ist.

11. Gabelbein nach Anspruch 10, **dadurch gekennzeichnet, dass** das zweite Abstützelement (21) in einem dem deckelartigen Element (15) des Standrohrs (2) nahen Bereich des Gleitrohrs (3) mit dem Gleitrohr (3) verbunden ist.

12. Gabelbein nach einem der vorangehenden Ansprüche, **dadurch gekennzeichnet, dass** die Sensoreinrichtung (22) im Inneren des Gleitrohrs (3) angeordnet und dazu vorgesehen ist, eine Relativstellung und/oder eine Relativgeschwindigkeit und/oder eine Relativbeschleunigung des Gleitrohrs (3) in Bezug auf das Standrohr (2) zu messen.

13. Gabelbein nach Anspruch 12, **dadurch gekennzeichnet, dass** die Sensoreinrichtung (22) ein erstes Sensorelement (22a) aufweist, das fest in Bezug auf das Gleitrohr (3) angeordnet ist, und ein relativ zu dem ersten Sensorelement (22a) verschieblich angeordnetes zweites Sensorelement (22b), das fest in Bezug auf das Standrohr (2) oder fest in Bezug auf die Standrohrfederbasis (11) angeordnet ist.

14. Gabelbein nach Anspruch 13, **dadurch gekennzeichnet, dass** die Sensoreinrichtung (22) in einem Bereich zwischen der Standrohrfederbasis (11) und einem freien Ende (3a) des Gleitrohrs (3) angeordnet ist.

15. Federgabel mit einem ungedämpften Gabelbein (1) nach einem der vorangehenden Ansprüche und einem weiteren Gabelbein, das eine durch eine Elektronik ansteuerbare Dämpfungseinrichtung aufweist, wobei die Elektronik die Dämpfungseinrichtung auf Basis von Signalen ansteuert, welche von der Sensoreinrichtung (22) des ungedämpften Gabelbeins (1) erzeugt werden.
